# EUROPEAN PATENT APPLICATION

(11) **EP 2 075 962 A1**
(43) Date of publication of application: **01.07.2009**
(21) Application number: 07291629.9
(22) Date of filing: 27.12.2007
(51) Int. Cl.: H04L 12/56

(54) **Inverse multiplexing for ethernet transport network**

(71) Applicant: Alcatel Lucent, 75008 Paris (FR)
(72) Inventor: Gehrke, Gerhard, 90480 Nürnberg (DE); Molina, Angel, 91054 Erlangen (DE)
(74) Representative: Wörz, Volker Alfred

(57) **Abstract**

In order to enhance link utilization in an Ethernet transport network it is suggested to determine a set of active member links out of a set of available member links and distribute the client signal (A) onto the active member links according to a distribution algorithm. For each of the active member links at least a portion of the client signal (A) is distributed to, a member signal (B) is generated comprising frames generated out of the portions that are distributed to the active member link. At least one control frame is generated comprising a counter describing the number of member frames transmitted on the active member link and a member signal (C) is generated by inserting the control frame into the member signal (B). The member signals (C) are transmitted from a first network element (1) to a second network element (2) via the Ethernet transport network (3). A received member signal (E) is generated out of each member signal (D) received at the second network element (2) by extracting the control frame and a received client signal (F) is generated by combining the received member signals (E) according to the distribution algorithm, wherein the received client signal (F) corresponds to the client signal (A).

## Description

The invention relates to a method for transmitting data via an Ethernet transport network, wherein a client signal is represented by a stream of Ethernet frames and the Ethernet frames are transmitted from a first network element to a second network element.

The present invention further relates to a system for transmitting a client signal from a first network element to a second network element via an Ethernet transport network, wherein the client signal is represented by a stream of Ethernet frames.

Data transmission based on the Ethernet protocol is widely used and has proven to be a robust data transmission protocol. In order to transmit a client signal via an Ethernet transport network, the client signal is mapped onto a single stream of Ethernet frames. Thus, the stream of Ethernet frames represents the client signal. Within this document, the term "client signal" denotes the client signal represented as a stream of Ethernet frames.

As with most TDM- (Time Division Multiplexing) based transport networks within an Ethernet transport network, there is often a significant mismatch between the bandwidth needed to transmit the original client signals and the available bandwidth of lower-layer transmission lines. In order to allocate a portion of the available bandwidth to a specific client signal, it is known to allocate one or more of the lower-layer links to the client signal and to distribute the client signal on the lower-layer links.

Each link path in an Ethernet transport network is separate from the other link paths. From this follows that Ethernet frames transmitted from a first network element to a second network element using two or more different links may be received at the second network element in an order differing from the original order of transmission. This is due to differing frame transmission times of the links, which in turn results for example from the fact that the Ethernet frames of different links may take different routes through the Ethernet transport network.

However, according to a basic requirement of the Ethernet transport protocol, Ethernet frames within a stream of Ethernet frames are not allowed to be reordered. This is the reason why inverse multiplexing is not in a widespread use for transmitting Ethernet frames. Currently, only a single inverse multiplexing technology is defined for Ethernet. This is the link aggregation (LAG) defined in IEEE Std 802.3-2005. In order to fulfil the basic Ethernet requirements, LAG only guarantees the correct sequence of Ethernet frames on a per conversation basis. Therefore, Ethernet frames belonging to a certain conversation are always sent via a single LAG link. This means that if a client signal comprises different conversations, each conversation could potentially be transmitted on a single LAG link in order to guarantee that the Ethernet frames of the conversations are still in the correct order, when received by a network element.

Different conversations may be caused by different applications, e.g. FTP based applications, VoIP applications, or HTTP applications. Since different types of conversations typically have different frame length, the link utilization will be unequal, since the total amount of data transmitted via a link that is allocated to a conversation of a short-framed type will be much less than the utilization of a link that is allocated to a conversation of a large-framed type of conversation. Thus, the transport efficiency depends on a current traffic mix. However, traffics with a single conversation only use a single link. Therefore, efficiency is not favourable for many scenarios. Furthermore, the efficiency is not predictable in general. Since the frame length of different conversations may differ, the unequal link utilization becomes a systematic problem, which will not be averaged over time.

It is therefore an object of the present invention to provide a possibility for enhancing link utilization in an Ethernet transport network.

The object is solved by a method of the above-mentioned kind, wherein a set of active member links is determined out of a set of available member links. This means that for each client signal to be transmitted via the Ethernet transport network, a set of active member links is defined. The client signal is then distributed onto the active member links according to a distribution algorithm. Preferably, this sequence is a round-robin sequence, which means that portions of the client signal are distributed to the active member links, one after the other.

For each of the active member links a portion of the client signal is distributed to, a member signal is generated. The member signal comprises Ethernet frames generated out of the portions that are distributed to the active member link. The frames could be generated by simply copying the frames of the client signal to the frames of the member signals.

From the member signal a member signal is generated by inserting control frames. The control frames are inserted at regular intervals and comprise information that enable the receiving network element to synchronize the data transmission. The member signals are then transmitted from the first network element to the second network element via the Ethernet transport network.

The second network element receives the member signals and extracts the control frames, thus generating a member signal. The receiving network element then combines the received member signals according to the distribution algorithm using information of the control frame. By combining the received member signals, a received client signal is generated that corresponds to the original client signal.

The control frame comprises an identifier for identifying the active member link it is transmitted with and a counter describing the number of member frames transmitted on the active member link. In particular, the counter describes the number of frames transmitted via the active member link between two successive control frames.

According to an embodiment of the present invention, each portion corresponds to an Ethernet frame of the client signal. This means that the frames of the incoming stream of Ethernet frames are distributed to a plurality of active member links. Advantageously, the portions are distributed based on a round-robin algorithm. This means that a first Ethernet frame is distributed to a first active member link, a consecutive second frame is distributed to a second active member link, and so on, until an Ethernet frame is distributed to each of the active member links. Then, the distribution sequence starts again by distributing the next Ethernet frame to the first active member link, and so on. At the second network element which is also denoted as sink, a synchronization is achieved by the position and the content of the control frames interleaved into the member signals. The client signal frames are reassembled in the order of their original sequence by making use of the knowledge about the round-robin sequence.

The present invention enables to distribute the Ethernet frames of a client signal equally to all member links, at least in a long term average.

For client signals of a constant-size frame length, the traffic transmitted via the active member links consists of frames of a determined size and the load of each active member link will be nearly the same, since the client-signal bandwidth is distributed homogenously.

If the traffic exhibits a frame size pattern which is uncorrelated with the number of active member links, the present invention also enables to achieve a homogenous bandwidth utilization on the average, when observed over sufficiently long periods of time. Thus, the utilization of the active member links is nearly equal for all active member links, regardless of the individual length of the client signal frames.

According to the present invention, the client signal frames are distributed regardless of the conversation they belong to. This means that frames of a single conversation are distributed over a plurality of active member links. This has the further advantage that the available bandwidth is predictable, depending on the number of active member links that are available for a certain client signal.

According to a preferred embodiment of the present invention, for each received member signal a delay value is determined. The delay value defines how many frames the received member signal has to be delayed in order to compensate different transmission delays of the received member signals. A number of frames of the received member signals are buffered according to the delay value. The delay value thus defines a delay in time. From this the closest matching number of member frames for each member link is determined and these member frames are buffered. The received member signal is then generated based on the distribution sequence. This embodiment enables to compensate for potentially different delays across active member links of a group that is associated with a client signal. Since the frames transmitted via each of the active member signals of a group potentially take different routes through the transport network, they may need different transmission times. In order to guarantee that the frames of the received member signal are in the same order as the frames of the client signal, the delay of each active member signal is determined in terms of a number of portions, in particular in terms of a number of frames. Frames of member links that are received too early are then buffered and thus delayed according to the determined number of delay frames.

This ensures that the frames of the generated received member signal are in the same order as the frames of the client signal.

Advantageously, the status of each member link is determined and a failed member link will be deactivated. This can be implemented by using information of the control frames in order to coordinate the status of the first network element and the second network element with respect to the member links that are to be used for transmission. If the second network element detects that a certain member link is failed, it causes this information to be transmitted in a control frame back to the first network element. The control frame will be transmitted in a traffic back from the second network element to the first network element. The first network element uses this information to deactivate the certain member link.

According to another preferred embodiment of the present invention, the Ethernet frames of the client signal are subdivided into smaller entities. The smaller entities are then distributed onto the active member links according to the distribution algorithm. Subdividing the Ethernet frames reduces the delay caused by longer and therefore slower frames transmitted via an active member link, when other frames of the client signal are short and are therefore transmitted faster to the second network element. This generally means that frames of different sizes may get delayed with varying times. This undesired effect is known as "frame jitter". This preferred embodiment reduces frame jitter.

Preferably, the smaller entities comprise one byte of information. It is also conceivable that the smaller entities comprise a multiple of a byte. A byte is a number of information bits that can be easily combined, since the payload of Ethernet frames is also defined in the number of bytes.

Advantageously, the frames of the active member signals are chosen to be of a maximal frame length. This reduces the overhead for data transmission, since the ratio of header information and payload of each frame will be optimal.

Since the length of frames of the member signals differs from the original frame length, the control frames advantageously comprise control information for identifying the boundary of the Ethernet frames of the client signal. This could be achieved using a pointer information which is used at the second network element to generate the received member signal which consists of frames that have the same frame length as the client signal frames.

Preferentially, the frame of the member signal currently to be generated is completed at a shorter than the maximal frame length, in case of a stopping incoming client signal. This ensures that the member signals are transmitted from the first network element to the second network element, as soon as possible. In particular, if the client signal stops, e.g. due to a broken transmission line or a delay of the client signal, the frame of the member signal currently to be generated is completed, even if the maximal frame length is not reached. The so completed frame will then be transmitted to the second network element. Thus, in case of a stopping incoming stream of client frames, the bytes of the latest frames will not starve by waiting to be completed with bytes from other client frames. Instead, the frame gets completed at a shorter than the maximal length.

If the frame length does not reach a required minimal length, the frame is padded with neutral information. This ensures that the transmission will not be blocked or delayed, if the currently received information is not enough to generate a frame of minimal frame length.

In order to indicate which bytes of a frame transmitted via a member link belong to a single client signal frame, pointers may indicate the end of each frame, wherein the pointers are included into the control information.

According to a further preferred embodiment of the present invention, the distribution algorithm determines the member link a portion has to be distributed onto as the member link that has currently been least utilized. This means that the active member link out of the set of possibly available active member links is determined that has currently been least utilized. This guarantees that the client signal frames are equally distributed to all active member links. Preferably, the least utilized active member link is determined with respect to start-up, re-synchronization or re-configuration of the current data transmission.

Preferably, a sequence identifier is added to each frame of the member signal indicating the position in the client signal. Thus, each Ethernet frame is marked with control information which contains the sequence number with respect to the sequence of the frames of the client signal. At the sink, i.e. the second network element, the frames of the client signal are reassembled in the order of their original sequence by making use of the control information, which is then stripped off. Advantageously, the received member signals are synchronized based on the sequence identifier. This means that the sequence numbers can support the synchronization as well.

This preferred embodiment enables to distribute the client signal frames equally to all active member links, also in a short term average.

The object is also solved by a system for transmitting a client signal, wherein the system comprises a core source element and a core sink element, and wherein the core source element and the core sink element are adapted for execution of the inventive method. In particular, the core source element comprises a distribution source element for distributing a client signal onto a plurality of separate active member links according to a distribution algorithm and generating for each separate active member link a member signal. The core source element further comprises a plurality of overhead source elements, wherein each overhead source element is assigned to an active separate member link and each overhead source element generates a control frame for insertion into the member signals. The control frame comprises a counter describing the number of member frames transmitted on the active member link. The core source element further comprises a source control element adapted to determine which member link has to be active for transmitting the current client signal.

The core sink element comprises a distribution sink element for generating a client signal by combining received member signals according to the distribution algorithm. The core sink element further comprises a plurality of overhead sink elements, each of which being attached to an active separate member link. Each overhead source element is adapted for extracting the control frame out of the received member signals and passing on the received member signal to the distribution sink element, where the member signals are combined and the client signal is reconstructed.

Further features, applications and advantages of the invention will become apparent from the following description of exemplary embodiments of the invention that are shown in the drawings.
- Figure 1: shows a schematized system for transmitting a client signal via an Ethernet transport network, wherein the system is adapted to execute the inventive method; and
- figure 2: shows schematically the distribution and combination of portions of the client signals, according to an embodiment of the present invention.

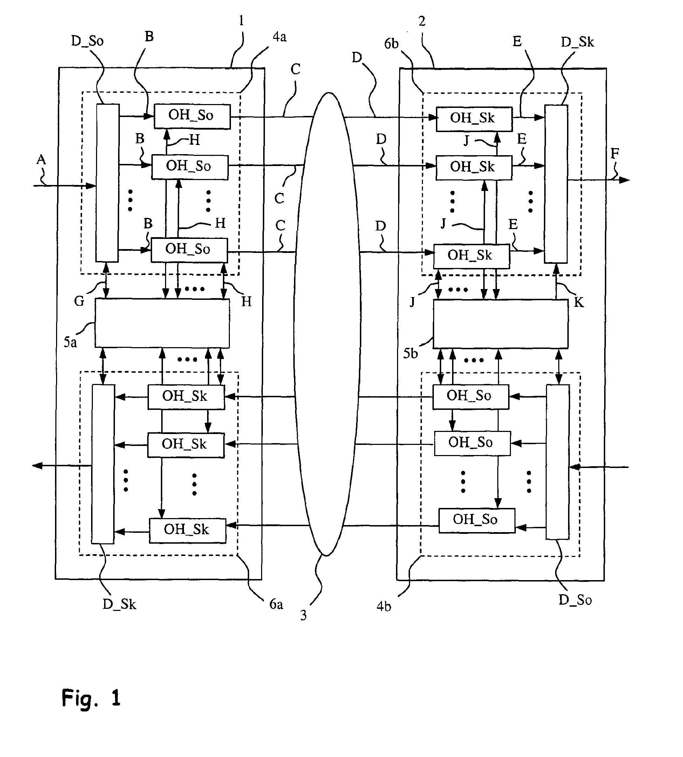

Figure 1 shows a system for transmitting Ethernet frames, the system being adapted to execute an embodiment of the inventive method. The system comprises a first network element 1, a second network element 2 and a Ethernet transport network 3 for transmitting Ethernet frames from network element 1 to network element 2 and from network element 2 to network element 1.

Network element 1 comprises a core source element 4a, a control element 5a and a core sink element 6a. The network element 2 comprises a core sink element 6b, a control element 5b, and a core source element 4b. The core source elements 4a and 4b consist of similar further elements. The core sink elements 6a and 6b also consist of similar elements. Thus, the further description primarily focuses on the core source element 4a and the core sink element 6b.

The core source element comprises a distribution source element D_So and several overhead source elements OH_So. The core sink element 6b comprises several overhead sink elements OH_Sk and a distribution sink element D_Sk.

Figure 1 further shows several signals A, B, C, D, E, F, G, H, J, and K. The meaning of these signals will be explained in the following description together with a description of the operating mode of the inventive system.

Signal A is a client signal that is already mapped onto Ethernet frames, using well-known mapping techniques. Client signal mapping/demapping processes are currently used in many Ethernet-based networks. As an example, most IP routers that use Ethernet interfaces use standardized IP-over-Ethernet client signal mapping/demapping processes.

The client signal A is to be transmitted from network element 1 to network element 2 via the Ethernet transport network 3. Therefore, the first network element 1 and the second network element 2 are connected by a number of member links in both directions of transmission. The system shown in figure 1 shows the typical case of a bidirectional application of the present invention, in which both the transmission from network element 1 to network element 2 and the transmission from network element 2 to network element 1 makes use of the inventive method. Although figure 1 shows the same number of member links for both directions of transmission, this is not necessary for correct operation of the present invention. Asymmetrical configurations can be operated in exactly the same way. In particular, an asymmetrical configuration may have several advantages, since there might be a need to have a greater bandwidth in one direction than in the other one. The following description mainly refers to data transmission from network element 1 to network element 2. However, the description is also valid for data transmission from network element 2 to network element 1.

The basic functionality of each of the elements shown in figure 1 is as follows:
The distribution source element D_So receives the client signal A and generates several member signals B. Each of the signals B is to be transmitted via a separate active member link from network element 1 to network element 2 via the Ethernet transport network 3. The distribution of the client signal A is controlled by the number of active member links. This information is received via signal G that is transmitted from the control element 5a to the distribution source element D_So.
Each one of the overhead source elements OH_So in network element 1 takes one of the member signals B and inserts control frames at regular intervals in between to generate member signals C. The content of the control frames is controlled by information coming from the control element 5a via signal H.
The control element 5a operates on the basis of a control protocol. At the first network element 1 control element 5a receives member status information coming from the second network element 2 and any user provisioning information for the source and calculates which members must be active at any given time and in which order the payload must be distributed onto these member links. In order to perform this calculation, the control element 5a maintains some transmit-site member-level and group-level state machines. The results of this calculation are provided to the distribution source element D_So via signal G and to the overhead source elements OH_So via signal H.
The overhead sink element OH_Sk receives the member signals D and detects, whether a member signal D is failed or not. This information is communicated from the overhead sink element OH_Sk to the control element 5b using signal J. The overhead sink element OH_Sk further extracts the control frames from the member signal D and forwards this information to the control element 5b, also using signal J.
At the second network element 2, the control element 5b receives member status information and the control frame information that is extracted from signals D. Control element 5b generates a signal J towards the overhead sink elements OH_Sk in order to indicate by how many portions, e.g. frames or bytes, each received member signal D is to be delayed, such that member signals E are aligned. Control element 5b further generates a signal K towards the distribution sink element D_Sk indicating how the interleaving of the member signals E is to be performed in order to rebuild signal F, which should be identical to client signal A. Control element 5b further generates a signal towards the co-located overhead source element OH_So indicating the status of the member signals D received at the network element 2. This information is transported to network element 1 in the reverse direction of transmission in order to close a control loop.
According to some embodiments of the present invention, the overhead sink element OH_Sk further delays the member signals by some number of portions or frames. The number of frames that each member is to be delayed by is specified by the control element 5b and communication to the overhead sink via signal J. The delay is determined in order to compensate for possibly different transmission delays over the Ethernet transport network 3, such that all member signals E are time-aligned, when they exit the overhead sink elements OH_Sk.
The distribution sink element D_Sk receives the member signal E and generates the client signal F by combining the received member signal E. This combining process is controlled by information received from control element 5b via signal K.

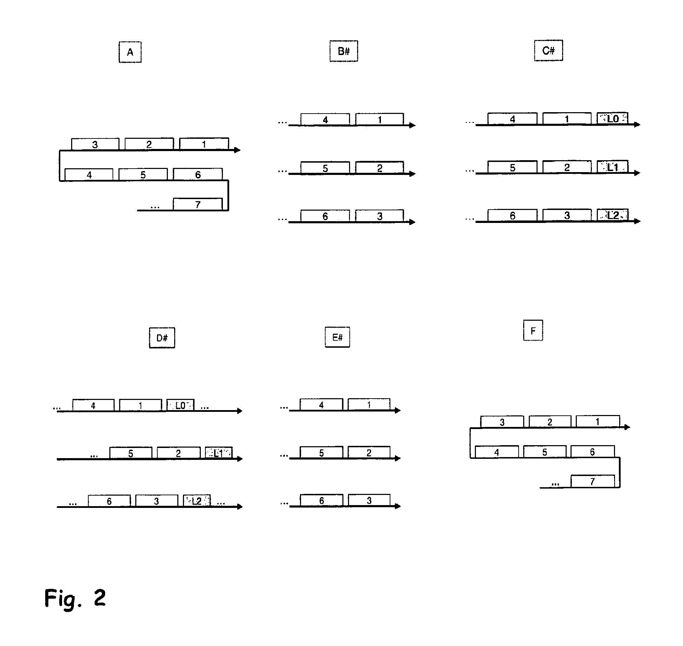

In figure 2, signals A to F are shown schematically. In figure 2, the arrow represents the time axis and the boxes represent Ethernet frames or portions thereof. The portions could in particular be bytewise portions of the Ethernet frames. Client signal A is shown as a stream of Ethernet frames. The frames are numbered in the given example according to their time of arrival in network element 1, and in particular in the distribution source element D_So. The distribution source element D_So generates several signals B, three of them are shown in figure 2. This is achieved by using an distribution algorithm. As shown in figure 2, the distribution algorithm can implement a round-robin distribution. According to another embodiment (not shown in figure 2), the distribution algorithm determines the active member link the current portion of the client signal A is to be distributed to as the active member link that has currently been least utilized.
Each of the signals B comprises a subset of the information of signal A. The signals B are processed by the overhead source elements OH_So in order to generate signals C. Signals C correspond to signals B. However, for each member link a control frame L0, L1, L2 is added. The signals C are then transmitted via the Ethernet transport network 3 to the network element 2, where the signals C are received as signals D. The overhead sink elements OH_Sk generate signals E by extracting the control frames Lo, L1, L2 and performing a time-realignment across the set of member links.
The distribution sink element D_Sk receives signals E and combines the frames or portions thereof in order to generate client signal F.
Although in figure 2 Ethernet frames or portions thereof have been represented with rectangles of the same size, this does not mean that the Ethernet frames must be of the same length. Furthermore, the Ethernet frames need not be equidistant in time of arrival.
Further signals are shown in figure 1. As already mentioned, signal G is a control signal from control element 5a to the distribution source elements D_So. For each member signal B the control signal G comprises an indication of the state of the member link and a link identifier. Signal H is also a control signal. Signal H is transmitted from the control element 5a to the overhead source elements D_So. Signal H is composed of a number of subsignals, one for each overhead source element OH_So. Signal H comprises for each overhead source element OH_So the information necessary to generate the next control frame for the particular member link.
Signal J is a bidirectional control signal transmitted between the control element 5b and the overhead sink elements OH_Sk of the second network element 2. Signal J is also composed of a number of subsignals, one for each overhead sink element OH_Sk. Each subsignal of signal J that is transmitted from the overhead sink element OH_Sk to the control element 5b comprises an indication of whether signal D and thus a corresponding member link has failed and a copy of the information received in each control frame. The subsignal of signal J that is transmitted from the overhead sink element OH_Sk to the control element 5b comprises an indication of the number of portions or frames each member signal is to be delayed.
Signal K is also a control signal. It is directed from the control element 5b to the distribution sink elements D_Sk. For each member signal E signal K comprises an indication of the state of the member link and a link identifier.
The control frames are used to synchronize the status of the core source element 4a and the core sink element 6b. This is necessary in order to ensure the in-order delivery of frames or portions thereof and the survivability to partial network failures. Furthermore, it enables hitless addition and removal of member links to a group of member links that are allocated for a current client signal A.
The present invention overcomes the shortcomings of the state of the art with respect to Ethernet inverse multiplexing in terms of bandwidth efficiency and the predictability of the bandwidth.
The distribution function of the known link aggregation is for many typical cases based on Ethernet or higher-protocol headers. Therefore, its efficiency is highly dependent on the current traffic pattern. However, the present invention enables to distribute the client signal homogenously on the active member links. Having large constant-sized frame streams, the load of the active member links will be nearly the same for all active member links, if the inventive method is used. If the frame size varies randomly, which is often the case, the present invention also achieves a homogenous bandwidth utilization on the average, when observed over a sufficiently long period of time. Thus, the utilization of the member links is nearly equal for all member links regardless of the individual length of the client frames.
The known link aggregation uses the same number of member links in both directions of the transmission. The present invention does not need such a requirement. This makes the inventive method applicable in situations, where asymmetric bandwidth demands exist, an example would be the distribution of video signals over Ethernet transport networks.
According to the known link aggregation, any traffic distribution function has to follow the constraint that one conversation must be transported completely via one single member link. This leads in the worst case to an extremely unbalanced distribution. Therefore, it was not possible to predict the capacity of the aggregated link. However, since the present invention achieves a nearly homogenous bandwidth utilization and in particular a nearly homogenous distribution of the client signal to the member links, the available bandwidth is predictable. Moreover, the available bandwidth grows almost linear with the number of member links.
As already described, according to an embodiment of the present invention, the frames of the client signals are distributed in a round-robin way. At the core sink element 6b, the synchronization of the frames received via the active member links by the member signals D is achieved based on the position and the content of the inventive control frames interleaved into the member signals C. The client frames and thus the client signal F are reassembled in the order of their original sequence by making use of the knowledge about the round-robin sequence. This embodiment achieves that the client frames are equally distributed to all active member links, at least in a long term average.
According to another embodiment, the frames of the client signal A are chopped into smaller portions, in particular into bytes. These bytes are distributed in a round-robin way onto multiple member links. On these member links, the bytes plus control information get assembled to Ethernet frames - preferably with the maximal standard compliant frame length. At the core sink element 6b the synchronization is achieved based on the position and the content of the control frames interleaved into the member signals C. The frames of the original client signal A are reconstructed in the order of their original sequence by making use of the knowledge about the round-robin sequence. The control information is extracted and interpreted in order to find the boundaries of the reassembled client frames. In case of a stopping incoming client frame stream, the bytes of the latest frames will not starve by waiting to be completed with bytes from other client frames. Instead, the frame gets completed at a shorter than the maximal length. Furthermore, in case the minimal standard compliant frame length would not be reached, the frames get padded to the minimal length. The control information indicates which bytes inside the assembled frames belong to a single client frame. This could be achieved by pointers indicating the last portion of each client frame for this member link and an indicator indicating whether this portion is the last portion of the client frame for any of the member links. The control information is transported inside of each of such assembled frames additionally to the aforementioned portions of the client frame. This embodiment achieves a nearly equal distribution of the client frames to all active member links. Furthermore, this embodiment avoids the generation of undesired frame jitter.
According to still another preferred embodiment of the present invention, the frames of the client signal A or smaller entities thereof are distributed always to the member link which currently has least been utilized from all the active member links, since start up, resynchronization, or reconfiguration. Each Ethernet frame is marked with control information, wherein the control information comprises a sequence number with respect to the sequence of the original stream of frames, i. e. the original client signal A. At the core sink element 6b, the original frames are reassembled in the order of their original sequence based on the control information, which is then stripped off. The synchronization can be performed using the same mechanism as described for other preferred embodiments. Alternatively, the sequence numbers can be used for synchronization. This embodiment achieves a nearly equal distribution of the client frames onto the active member links, also in a short term average.
As already mentioned, the present invention enables to transmit Ethernet frames via an Ethernet transport network in both directions, wherein the number of active member links for both directions may differ. It is further conceivable to use the present invention only in a unidirectional way, without having to operate the inventive method in both directions of transmission. In this case, the control loop cannot be closed using the control frames, since no control frames are transmitted backwards. However, the control loop must be closed in order to determine the number of active member links based on failed member signals and also based on further status information. In these cases, the control loop could be closed using any known out-of-band mechanism for transmitting the information of the control frames backwards to the core source element 4a.
The present invention is also applicable for broadcasting a client signal A to a plurality of core sink elements 6b. This could be achieved by replicating the member signals C in the Ethernet transport network, so that all core sink elements 6b of the plurality of the core sink elements 6b can be reached in an efficient way. The core source element 4a will then accept several incoming return channels for calculating the transmit states of each of the plurality of core sink elements 6b. Thus, only the member signals C which arrive at all the core sink elements 6b successfully will contain a load. This embodiment is very sensitive to network failures and might thus be useful in high-reliability environments, where the focus is on an efficient transport of broadcast data.

## Claims

1. Method for transmitting data via an Ethernet transport network (3), wherein a client signal (A) is represented by a stream of Ethernet frames, the Ethernet frames are transmitted from a first network element (1) to a second network element (2), **characterized in that** the method comprises the steps of
- determining a set of active member links out of a set of available member links;
- distributing the client signal (A) onto the active member links according to a distribution algorithm;
- for each of the active member links at least a portion of the client signal (A) is distributed to, generating a member signal (B) comprising frames generated out of the portions that are distributed to the active member link, generating at least one control frame comprising a counter describing the number of member frames transmitted on the active member link, and generating a member signal (C) by inserting the control frame into the member signal (B);
- transmitting the member signals (C) from the first network element (1) to the second network element (2) via the Ethernet transport network (3);
- receiving member signals (D) at the second network element (2);
- generating a received member signal (E) out of each received member signal (D) by extracting the control frame; and
- generating a received client signal (F) by combining the received member signals (E) according to the distribution algorithm, wherein the received client signal (F) corresponds to the client signal (A).

2. The method according to claim 1, **characterized in that** the distribution algorithm defines a round-robin distribution.

3. The method according to claim 1, **characterized in that** the distribution algorithm determines the active member link a current portion of the client signal (A) is to be distributed to as the active member link that has currently been least utilized.

4. The method according to claim 3, **characterized in that** the least utilized active member link is determined with respect to start-up, re-synchronization or re-configuration of the current data transmission.

5. The method according to anyone of the preceding claims, **characterized in that** a sequence identifier is added to each frame of the member signal (B) indicating the position of the frame or the portion thereof in the client signal (A) and that the received member signals (D) are synchronised based on the sequence identifier.

6. The method according to anyone of the preceding claims, **characterized in that** for each received member signal (D) a delay value is determined defining how many frames the received member signal (D) has to be delayed and this number of frames are buffered from the received member signal (D) or the generated member signal (E) before generating signal (F) in order to compensate different transmission delays of the received member signals (D).

7. The method according to anyone of the preceding claims, **characterized in that** the status of each member link is determined and a failed member link is deactivated.

8. The method according to anyone of the preceding claims, **characterized in that** the Ethernet frames of the client signal (A) are subdivided into smaller entities and the smaller entities are distributed according to the distribution algorithm.

9. The method according to claim 8, **characterized in that** the smaller entities comprise one byte or a plurality of bytes.

10. The method according to claim 8 or claim 9, **characterized in that** the frames of the active member signals (B, C, D, E) are of a maximal frame length.

11. The method according to anyone of claims 8 to 10, **characterized in that** the control frames comprise control information for identifying the boundary of the Ethernet frames of the client signal (A).

12. The method according to claim 10 or claim 11, **characterized in that** in case of a stopping incoming client signal (A), the frame of the member signal (B) currently to be generated is completed at a shorter than the maximal length.

13. The method according to anyone of claims 8 to 12, **characterized in that** the control frame comprises information indicating which of the smaller entities inside a frame belong to the client signal (A).

14. System for transmitting a client signal (A) via an Ethernet transport network (3), **characterized in that** the system comprises a core source element (4a, 4b) and a core sink element (6a, 6b), wherein
- the core source element (4a, 4b) comprises a distribution source element (D_So) for distributing a client signal (A) onto a plurality of separate active member links according to a distribution algorithm and generating for each separate active member link a member signal (B);
- the core source element (4a, 4b) comprises a plurality of overhead source elements (OH_So), wherein each overhead source element (OH_So) is attached to an active member link and each overhead source element (OH_So) is adapted for inserting a control frame into member signal (B) and generating a member signal (C);
- the first network element (1) comprises a source control element (5a) adapted for determining which member link has to be active for transmitting the current client signal (A);
- the core sink element (6a, 6b) comprises a plurality of overhead sink elements (OH_Sk) attached to an active member link, wherein each overhead sink element (OH_Sk) is adapted for extracting the control frame from the received member signals (D), generating the received member signal (E), and forwarding the received member signal (E) to a distribution sink element (D_Sk);
- the core sink element (6a, 6b) comprises the distribution sink element (D_Sk) for generating a received client signal (F) by combining received member signals (E) according to the distribution algorithm, wherein the received client signal (F) corresponds to client signal (A);

15. The system of claims 14, **characterized in that** the system is adapted to execute a method according to any one of claims 2 to 13.
